# DEMANDE DE BREVET EUROPEEN

(11) **EP 1 783 391 A1**
(43) Date de publication de la demande: **09.05.2007**
(21) Numéro de dépôt: 06301078.9
(22) Date de dépôt: 23.10.2006
(51) Int. Cl.: F16D 13/70, F16D 13/72

(54) **Dispositif d'embrayage avec masses thermiques**

(30) Priorité: 08.11.2005 FR 0511358
(71) Demandeur: Renault s.a.s., 92100 Boulogne Billancourt (FR)
(72) Inventeur: Cassu, Romain, 93110 Rosny-sous-Bois (FR)
(74) Mandataire: Rougemont, Bernard

(57) **Abrégé**

Dispositif d'embrayage entre deux arbres d'entraînement comprenant un volant 3 destiné à être lié en rotation au premier arbre 1, un disque de friction 6 destiné à être lié en rotation au deuxième arbre 2 et un plateau de pression 5, solidaire en rotation du volant 3 et apte, de manière sélective, à plaquer le disque de friction 6 contre le volant 3. Le plateau de pression 5 présente au moins une excroissance 12 localisée de matière. Le volant 3 présente au moins une excroissance 23 située dans une position angulaire différente de la position angulaire de l'excroissance 12 du plateau de pression 5, l'excroissance 23 du volant 3 étant en matériau thermiquement conducteur.

## Description

L'invention concerne le domaine des dispositifs d'embrayage entre deux arbres d'entraînement.

Dans ce domaine, le brevet US 5 515 745 (TSURUTA et al.) décrit un dispositif de volant comprenant un disque d'embrayage pincé entre un plateau de pression et la surface de friction du volant. L'évacuation de la chaleur se fait grâce à une pluralité de trous traversant le volant et se prolongeant vers la surface de friction. Il n'y a aucun lien entre ces moyens d'évacuation de la chaleur et des moyens de maintien du plateau de pression.

Dans ce type d'embrayage, le plateau de pression est essentiellement flottant selon la direction des arbres d'entraînement. Le plateau de pression est maintenu uniquement par certains points de fixation. L'inconvénient est que la chaleur produite par la friction du disque d'embrayage échauffe le plateau de pression. Il arrive que la température du plateau de pression ne soit pas homogène quel que soit le secteur angulaire du plateau autour de l'axe de l'embrayage. Le plateau a tendance à se gondoler et à exercer une pression non uniforme angulairement. Cela provoque un suréchauffement localisé du volant. Ce suréchauffement peut provoquer un faïençage de la surface du volant, voire des fissures dans les zones suréchauffées.

L'invention propose un dispositif d'embrayage qui réduit l'échauffement localisé du volant dû à la déformation du disque de pression.

Selon un mode de réalisation de l'invention, le dispositif d'embrayage entre deux arbres d'entraînement comprend un volant destiné à être lié en rotation au premier arbre, un disque de friction destiné à être lié en rotation au deuxième arbre et un plateau de pression, solidaire en rotation du volant et apte, de manière sélective, à plaquer le disque de friction contre le volant. Le plateau de pression présente au moins une excroissance localisée de matière et le volant présente au moins une excroissance située dans une position angulaire différente de la position angulaire de l'excroissance du plateau de pression, l'excroissance du volant étant en matériau thermiquement conducteur.

On conçoit que dans un tel dispositif d'embrayage, la ou les excroissances de matière du plateau provoquent une irrégularité angulaire de la température du plateau et sa déformation entre les excroissances de matière du plateau. De même, les excroissances du volant constituent des masses thermiques qui favorisent par conduction l'évacuation de la chaleur vers une zone, hors de la zone de friction, où la température est moindre. Ce refroidissement localisé du volant se fait entre les positions angulaires des excroissances de matière du plateau de pression, c'est-à-dire dans des positions angulaires où la déformation du plateau de pression crée une surpression localisée. Ainsi, grâce aux excroissances localisées du volant, l'échauffement localisé dans le volant est réduit et l'uniformité angulaire de la température est améliorée.

Avantageusement, l'excroissance du plateau de pression est une patte de fixation coopérant avec un moyen de solidarisation en rotation du plateau de pression avec le volant. L'excroissance du volant peut faire partie intégrante du volant.

Avantageusement, le plateau de pression présente plusieurs pattes de fixation également réparties sur le plateau, et le volant présente une pluralité d'excroissances de volant situées angulairement entre les pattes de fixation.

Selon une variante, le volant est de forme générale annulaire et les excroissances de volant sont constituées par une surépaisseur du volant dans un secteur angulaire.

Selon une autre variante, le plateau de pression est mobile axialement entre une position d'embrayage où le disque de friction est pressé contre le volant, et une position libre où le plateau de pression n'exerce pas d'effort sur le disque de friction.

Selon un mode de réalisation, le disque de friction et le volant présentent chacun une surface de friction annulaire destinées à entrer en contact sous l'action du plateau de pression. Au moins une excroissance de volant peut être située radialement à l'intérieur de la surface de friction. Au moins une excroissance de volant peut être située radialement à l'extérieur de la surface de friction.

D'autres caractéristiques et avantages de l'invention apparaîtront à la lecture de la description détaillée de quelques modes de réalisation pris à titre d'exemples non limitatifs et illustrée par les dessins annexés, sur lesquels :
- la figure 1 est une coupe axiale d'un mode de réalisation d'un dispositif d'embrayage selon l'invention ; et
- la figure 2 est, dans sa partie gauche, une demi-vue selon le plan IIa de la figure 1, et dans sa partie droite, une demi-vue selon le plan IIb de la figure 1.

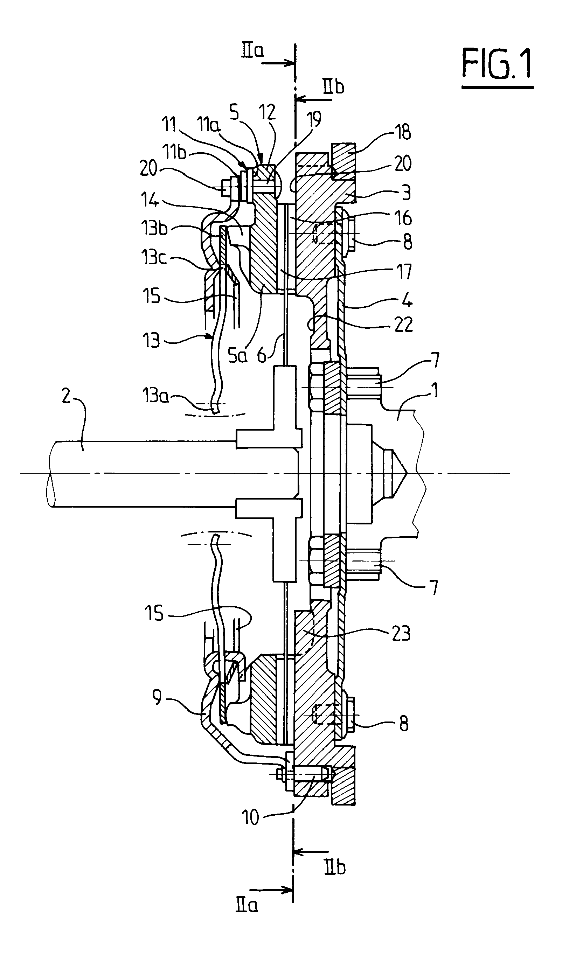

Comme illustré sur la figure 1, le dispositif d'embrayage relie un arbre de vilebrequin 1 constituant un premier arbre et un arbre primaire de boîte de vitesses 2 constituant un deuxième arbre. Le dispositif d'embrayage comprend un volant 3 relié au vilebrequin 1 par un flasque souple 4, un plateau de pression 5 et un disque de friction 6 entraînant l'arbre primaire 2. Le flasque souple 4 est muni d'une série de vis de vilebrequin 7 réparties sur un cercle intérieur du flasque souple 4 fixant le flasque 4 sur le vilebrequin 1.

Une série de vis de volant 8 est répartie sur un cercle extérieur du flasque souple 4 fixant le flasque 4 au volant 3. La souplesse du flasque souple 4 permet que le volant 3 tourne autour du vilebrequin 1 selon un plan pouvant être légèrement décalé par rapport à un plan perpendiculaire au vilebrequin 1. Un couvercle 9 est fixé rigidement sur le volant 3 et positionné grâce à des goupilles 10 de positionnement du couvercle 9. Le plateau de pression 5 est suspendu sur le couvercle 9 grâce à trois lames de suspension 11 permettant au plateau de pression 5 d'être entraîné en rotation par le volant 3 et le couvercle 9 et d'être libre en translation selon l'axe du vilebrequin 1. Une extrémité 11a des lames de suspension 11 est fixée sur une patte de fixation 12 s'étendant radialement à l'extérieur d'une partie principale annulaire 5a du plateau de pression 5. L'autre extrémité 11b de chaque lame de suspension 11 est fixée au couvercle 9.

Une série de lames de diaphragme 13 s'étendent radialement et couvrent ensemble une surface discale perpendiculaire à l'axe du dispositif d'embrayage. Chacune des lames 13 comporte une extrémité intérieure 13a reliée à un actionneur d'embrayage non représenté, et une extrémité 13b reliée à une forme d'accrochage 14 du plateau de pression 5. Un jonc élastique de plaquage 15 est logé entre le couvercle 9 et l'ensemble des lames de diaphragme 13, de manière qu'un point 13c de la lame de diaphragme 13 soit en appui permanent en un point du couvercle 9.

Lorsque l'actionneur du dispositif d'embrayage déplace axialement l'extrémité 13a du diaphragme vers la gauche de la figure 1, la lame de diaphragme 13 pivote autour du point d'appui 13c et de la forme d'accrochage 14 et entraîne le plateau de pression 5 vers la droite de la figure 1. Les lames de suspension 11 se déforment alors pour permettre au plateau de pression 5 de se déplacer parallèlement à lui-même en direction du volant 3.

Le plateau de pression 5 est muni d'une garniture 16 et le volant 3 est muni d'une garniture 17. Lors du déplacement axial du plateau de pression 5, les garnitures 16 et 17 sont en regard et pincent de chaque côté le disque de friction 6. L'effort de frottement exercé par les garnitures 16 et 17 sur le disque de friction 6 permet de transmettre le couple depuis le vilebrequin 1 jusqu'à l'arbre primaire de boîte de vitesses 2.

Lorsque l'actionneur du dispositif d'embrayage déplace l'extrémité 13a des lames de diaphragme 13 vers la droite de la figure, la lame 13 pivote autour du point d'appui 13c et l'extrémité 13b de chacune des lames de diaphragme vient tirer la forme d'accrochage correspondante et emmène le plateau de pression 5 vers une position libre où le plateau de pression 5 n'exerce pas d'effort d'entraînement en rotation sur le disque de friction 6.

Le premier arbre 1 et le deuxième arbre 2 sont reliés au dispositif d'embrayage par des disques souples 4 et 6, de sorte qu'un léger mésalignement angulaire entre le premier arbre 1 et le deuxième arbre 2 n'entraîne pas une transmission d'un moment de flexion d'un arbre à l'autre.

Le volant 3 est muni d'une couronne 18 équipée de dentures servant par exemple à l'entraînement d'un alternateur du véhicule.

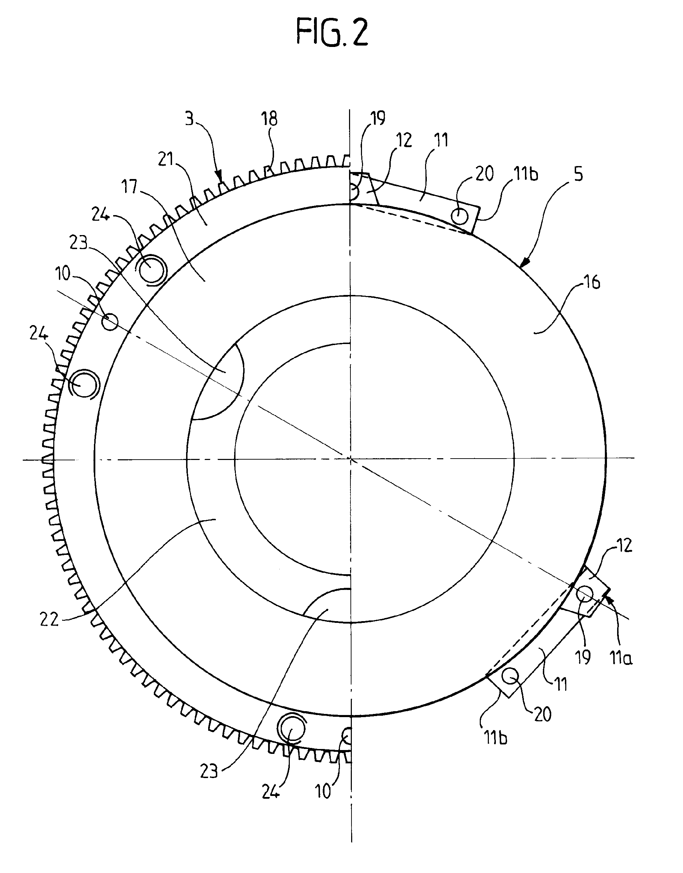

On va maintenant décrire, à l'aide de la figure 2, la disposition angulaire des excroissances du plateau de pression 5 et du volant 3. La demi-vue de gauche de la figure 2 décrit le volant et la demi-vue de droite représente le plateau de pression 5, avec en arrière plan les lames de suspension 11. Une vue complète du volant 3 et du plateau de pression 5 peut être obtenue en complétant ces vues par la portion symétrique autour de l'axe vertical de la figure 2.

Le plateau de pression 5 présente trois pattes de fixation 12 réparties également à 120°. L'extrémité 11a de chacune des lames de suspension 11 est fixée à la patte de fixation 12 correspondante par un rivet 19. L'autre extrémité 11b de chacune des trois lames de suspension 11 est fixée par un rivet 20 sur le couvercle 9, selon trois points également répartis à 120° et décalés par rapport aux pattes de fixation 12 de la longueur de la lame de suspension 11. Les goupilles 10 de centrage du volant 3 dans le couvercle 9 sont disposées également à 120°, de manière intercalée par rapport à la position angulaire des pattes de fixation 12.

Le volant 3 présente une surface d'appui annulaire 21 recevant la garniture de volant 17 ainsi que le couvercle 9 dans une position radialement à l'extérieur de la garniture de volant 17. Le volant 3 présente également un évidement central 22 permettant de réduire l'inertie du volant 3. Le volant 3 présente également trois excroissances de matière 23 s'étendant radialement à l'intérieur de l'évidement central 22 dans le prolongement de la surface d'appui annulaire 21, et ceci dans une position angulaire correspondant aux goupilles 10 et donc dans une position angulaire intercalée avec l'excroissance de matière du plateau de pression 5 servant de patte de fixation 12.

Le couvercle 9 est fixé sur le volant 3 grâce à des taraudages 24 ménagés dans le volant 3, de part et d'autre des goupilles 10.

Toutes formes du plateau de pression 5 s'étendant radialement à l'intérieur ou à l'extérieur de la garniture de plateau 16, ou bien s'étendant axialement à l'arrière de la garniture 16 et qui seraient susceptible d'introduire une dissymétrie angulaire significative dans la dissipation thermique du plateau de pression 5, seraient considérées comme étant les excroissances localisées de matière du plateau de pression servant de repère angulaire aux masses thermiques de l'invention.

L'emplacement des excroissances de matière 23 à l'intérieur de l'évidement central 22 du volant 3, permet d'obtenir ces excroissances directement par fonderie sans coût supplémentaire. Le matériau du plateau de pression 5 et du volant 3 est par exemple en fonte graphite et de préférence en fonte graphite lamellaire. Le fait que ces excroissances de matière 23 soient en matériau thermiquement conducteur, permet aux calories générées par le frottement de la garniture de plateau 16 sur le disque de friction 6 d'être évacuées plus facilement dans les secteurs angulaires présentant ces excroissances 23 que dans les autres secteurs angulaires, en raison d'une section conductrice plus importante. Par ailleurs, des trous de ventilation, non représentés sur les figures, sont souvent ménagés de manière à ce que de l'air circule à l'intérieur du dispositif d'embrayage et notamment au voisinage de l'évidement central 22.

Dans un autre mode de réalisation de l'invention, le plateau de pression 5 peut être relié au couvercle 9 par tout autre moyen de solidarisation en rotation laissant libre la translation axiale du plateau de pression 5.

Selon encore un autre mode de réalisation, les masses thermiques 23 de l'invention peuvent être situées ailleurs sur le volant 3 dès lors que leur position angulaire est intercalée avec les excroissances du plateau de pression.

Les masses thermiques 23 de l'invention peuvent être situées à l'arrière du volant 3, du côté des fixations des vis 8 et couplées par exemple avec des formes faisant radiateur pour augmenter le refroidissement du volant 3 dans un secteur angulaire intercalé avec les excroissances du plateau de pression 5. Les excroissances 23 peuvent être radialement situées à l'extérieur des garnitures de volant 17 au voisinage des goupilles 10, de manière à augmenter la conduction thermique entre le volant 3 et le couvercle 9 à cet endroit.

Selon encore un autre mode de réalisation, les masses thermiques 23 peuvent être rajoutées au volant 3, être d'un matériau identique ou différent du matériau du volant 3, à condition que le matériau des masses thermiques 23 soit conducteur et que la liaison de ces masses ajoutée avec le volant 3 soit elle-même conductrice. Les masses peuvent être réalisées par des cordons de soudure ou de brasure, ou être collées au volant 3 par une colle conductrice.

Selon encore un autre mode de réalisation de l'invention, les excroissances de matière sont ajoutées directement sur le plateau de pression 5, de manière à compenser d'autres excroissances de matière servant par exemple de patte de fixation 12. Ainsi, l'irrégularité angulaire de l'échauffement du plateau de pression 16 est directement corrigée sans qu'il y ait besoin de corriger cet effet sur le volant 3.

Néanmoins, les excroissances de matière 23, corrigeant l'effet des pattes de fixation 12, sont implantées de préférence sur le volant 3. En effet, le volant 3 est de forme générale annulaire et reçoit de nombreux moyens de fixation, tels que les vis 8, les taraudages 24, ainsi que la fixation de la couronne 18 et de la garniture 17. Ces nombreux points de fixation introduisent non seulement des dissymétries de conduction et de radiation thermiques, mais également des points de fragilité mécanique. L'adjonction de masse thermique 23 permet d'améliorer le refroidissement dans des secteurs angulaires qui, non seulement sont surchauffés en raison de la déformation du plateau de pression 5, mais également qui contiennent des points plus fragiles mécaniquement. Le fait de disposer les excroissances de matière 23 sur le volant 3, permet de manière bon marché de tenir compte de l'un et/ou de l'autre des phénomènes.

## Revendications

1. -Dispositif d'embrayage entre deux arbres d'entraînement comprenant un volant (3) destiné à être lié en rotation au premier arbre (1), un disque de friction (6) destiné à être lié en rotation au deuxième arbre (2) et un plateau de pression (5), solidaire en rotation du volant (3) et apte, de manière sélective, à plaquer le disque de friction (6) contre le volant (3), le plateau de pression (5) présentant au moins une excroissance (12) localisée de matière, **caractérisé par le fait que** le volant (3) présente au moins une excroissance (23) située dans une position angulaire différente de la position angulaire de l'excroissance (12) du plateau de pression (5), l'excroissance (23) du volant (5) étant en matériau thermiquement conducteur.

2. -Dispositif selon la revendication 1, dans lequel l'excroissance (12) du plateau de pression (5) est une patte de fixation (12) coopérant avec un moyen de solidarisation en rotation du plateau de pression (5) avec le volant (3).

3. -Dispositif selon la revendication 1 ou 2, dans lequel l'excroissance (23) du volant (3) fait partie intégrante du volant (3).

4. -Dispositif selon la revendication 2 ou 3, dans lequel le plateau de pression (5) présente plusieurs pattes de fixation (12) également réparties sur le plateau (5), et le volant (3) présente une pluralité d'excroissances de volant (23) situées angulairement entre les pattes de fixation (12).

5. -Dispositif selon l'une quelconque des revendications précédentes, dans lequel le volant (3) est de forme générale annulaire et les excroissances de volant (23) sont constituées par une surépaisseur du volant (3) dans un secteur angulaire.

6. - Dispositif selon l'une quelconque des revendications précédentes, dans lequel le plateau de pression (5) est mobile axialement entre une position d'embrayage où le disque de friction (6) est pressé contre le volant (3), et une position libre où le plateau de pression (5) n'exerce pas d'effort sur le disque de friction (6).

7. -Dispositif selon l'une quelconque des revendications précédentes, dans lequel le disque de friction (6) et le volant (3) présentent chacun une surface de friction (17) annulaire destinées à entrer en contact sous l'action du plateau de pression (5).

8. - Dispositif selon la revendication 7, dans lequel au moins une excroissance de volant (23) est située radialement à l'intérieur de la surface de friction (17).

9. -Dispositif selon la revendication 7 ou 8, dans lequel au moins une excroissance de volant (23) est située radialement à l'extérieur de la surface de friction (17).
